Europäisches Patentamt

European Patent Office

Office européen des brevets

(19)

(11)   EP 1 696 248 A1

(12)   **EUROPEAN PATENT APPLICATION**
published in accordance with Art. 158(3) EPC

(43) Date of publication:
**30.08.2006 Bulletin 2006/35**

(51) Int Cl.:
*G02B 3/00* (2006.01)     *G02B 3/08* (2006.01)
*G02B 5/18* (2006.01)

(21) Application number: **04799874.5**

(22) Date of filing: **22.11.2004**

(86) International application number:
**PCT/JP2004/017672**

(87) International publication number:
**WO 2005/062083 (07.07.2005 Gazette 2005/27)**

(84) Designated Contracting States:
**DE FR GB**

(30) Priority: **19.12.2003   JP 2003422354**
                **10.09.2004   JP 2004264196**

(71) Applicant: **Sumitomo Electric Industries, Ltd.**
**Osaka-shi, Osaka 541-0041 (JP)**

(72) Inventors:
• **USHIRO, Toshihiko**
  **Itami-shi,**
  **Hyogo 664-0016 (JP)**

• **ODA, Kazuhiko**
  **Itami-shi,**
  **Hyogo 664-0016 (JP)**
• **MATSUURA, Takashi**
  **Itami-shi,**
  **Hyogo 664-0016 (JP)**
• **OKUBO, Soichiro**
  **Osaka 554-0024 (JP)**

(74) Representative: **HOFFMANN EITLE**
**Patent- und Rechtsanwälte**
**Arabellastrasse 4**
**81925 München (DE)**

(54)   **FLAT SHEET TYPE MICRO-LENS AND PRODUCTION METHOD THEREFOR**

(57)     The present invention provides a simple and low-cost flat microlens that can be used in various optical fields in a mechanically and thermally stable manner.

A microlens is formed using a transparent DLC film (41). The DLC film (41) includes regions (Rmn) with graded indices of refraction. When a light beam passes through a region with graded indices of refraction, the light is focused.

FIG. 1A

**(Cont. next page)**

EP 1 696 248 A1

FIG. 1B

FIG. 1C

## Description

Technical Field

The present invention relates to a flat microlens that can be used in various optical fields and an improved method for making the same.

Background Art

Flat microlenses can be used in various optical fields. For example, they can be used in the field of optical communications as condensers to provide optical coupling between laser diodes (LD) and optical fibers. Also, flat microlens arrays can be used effectively as focus lens arrays in projectors.

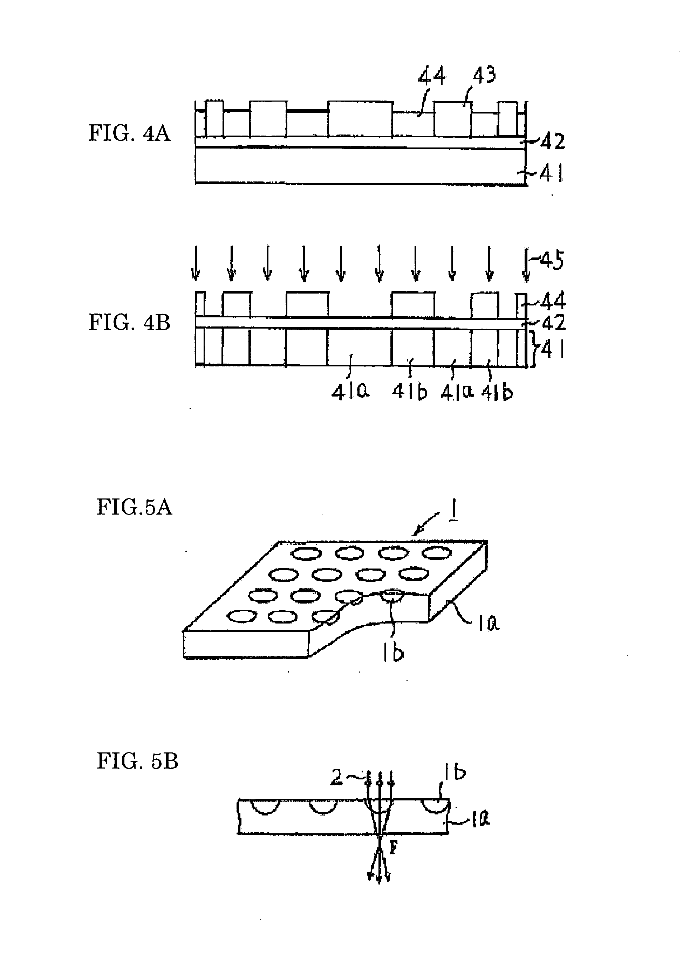

Fig. 5A is a simplified, partially cut-away perspective drawing of an example of a conventional flat microlens array. Fig. 5B shows a simplified cross-section drawing of the lens array from Fig. 5A to illustrate the optical features (see pp. 20 - 21 and pp. 71 - 81 in "Ultra-precision processing and mass production technology for microlens (arrays)", Gijutsu Jouhou Kyoukai, April 28, 2003). In a flat microlens array 1, a plurality of high refractive index regions 1b arranged in an array are formed on a main surface of a uniform thin glass 1a. Each of the high refractive index regions 1b has a roughly hemispherical shape (e.g., 200 micron diameter and 80 micron depth) in the thin glass 1a. Thus, as shown in Fig. 5B, each of the high refractive index regions 1b act as a convex lens, and incident parallel rays 2 are focused to a focal point F.

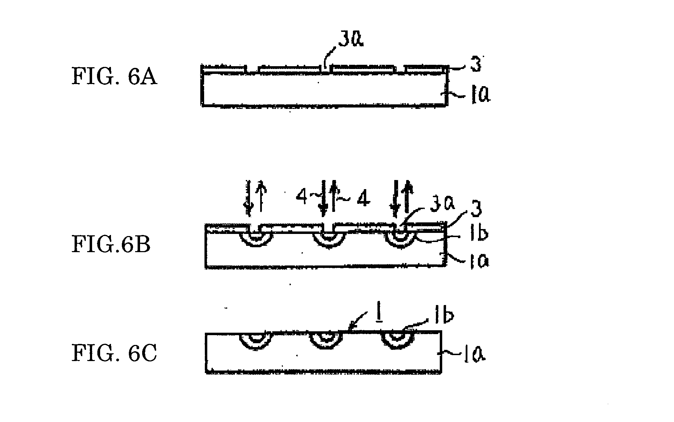

Fig. 6A through Fig. 6C show simplified cross-sections of an example of a method for making the flat microlens array in Fig. 5. In Fig. 6A, photolithography and etching are performed to form on a glass substrate 1a a metal resist layer 3 having small holes 3a arranged in an array. In Fig. 6B, the high refractive index regions 1b are formed using the small holes 3a of the resist layer 3 by performing a widely known ion exchange method, i.e., an ion exchange as indicated by the opposing arrows 4. Since the ion exchange proceeds through the isotropic thermal diffusion of ions, the high refractive index regions 1b are formed naturally as simplified hemispherical shapes in the glass substrate 1a. Of course, the metal resist layer 3 must be formed with heat resistance sufficient for withstanding the thermal diffusion temperature and must be able to obstruct the passage of ions. Then, in Fig. 6C, the resist layer 3 is removed to obtain the flat microlens array 1.

This type of microlens uses the refraction of light and is a refraction microlens. Also, this type of lens, in which different refractive indices are distributed throughout a transparent substrate, is sometimes referred to as a GRIN (GRaded INdex) lens.

Conventionally, microlenses have been primarily refraction microlenses, but attention has been given more recently to diffraction microlenses in order to reduce the size, weight, cost, and the like of optical systems. In diffraction microlenses, the diffraction of light is used to generate lens functions. Diffraction microlenses can be broadly categorized primarily as relief (or graded thickness) microlenses and graded index microlenses. In a typical relief microlens, a plurality of fine grooves are formed as concentric rings on the surface of a transparent substrate, and the depths of the grooves (i.e., the thicknesses of the substrate) are varied in a periodic manner. In a typical graded index microlenses, a flat substrate is separated into a plurality of banded regions formed as concentric rings, and the refractive indices of these regions are varied in a periodic manner.

The periodic varying of the thickness or the refractive index of the transparent substrate generates periodic variations in the phase of light passing through the substrate, resulting in diffraction of the light similar to the effect of a diffraction grating. The angle of diffraction of light passing through the diffraction grating increases as the grating pitch of the diffraction grating decreases. Thus, by forming the concentric diffraction grating so that the grating pitch decreases from the center to the edge, the light passing through the diffraction grating can be focused as in a convex lens.

Fig. 7 shows a simplified cross-section drawing of an example of a method for making a conventional relief microlens. Fig. 8 shows a simplified plan drawing of an exposure mask used in the method shown in Fig. 7.

In Fig. 7a, a positive photoresist layer 12 is formed on an Si substrate 11, and ultraviolet light 14a is applied through a first photomask 13. This first photomask 13 has concentric ring-shaped bands as shown in Fig. 8A, with the pitch between rings decreasing toward the outer edge. In Fig. 8A, only two transparent rings are shown to simplify the structure in the drawing, but it goes without saying that more rings can be used.

In Fig. 7B, the exposed resist layer 12 is developed to form a first resist pattern 12a. Then, the first resist pattern 12a is used as a mask to form banded groove rings having a predetermined depth using reactive ion etching (RIE) as indicated by an arrow 14b.

In Fig. 7C, the first resist pattern 12a is removed to provide binary level (optical phases graded in two levels) relief microlenses 11a. The widths and depths of the banded groove rings are set up to provide optimal diffraction efficiency for the particular structure of the two-level or multi-level relief microlens.

Fig. 7D through Fig. 7F show the steps for making a four-level microlens following steps similar to those from Fig. 7A through Fig. 7C.

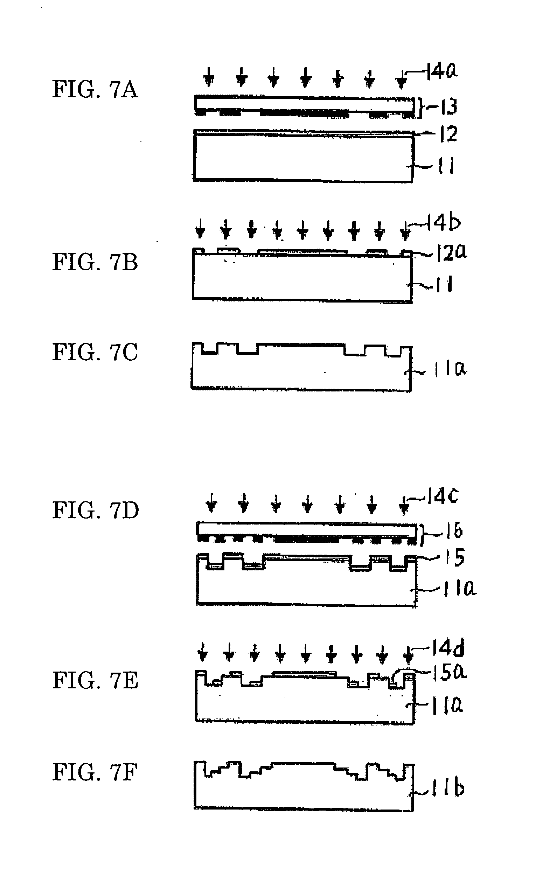

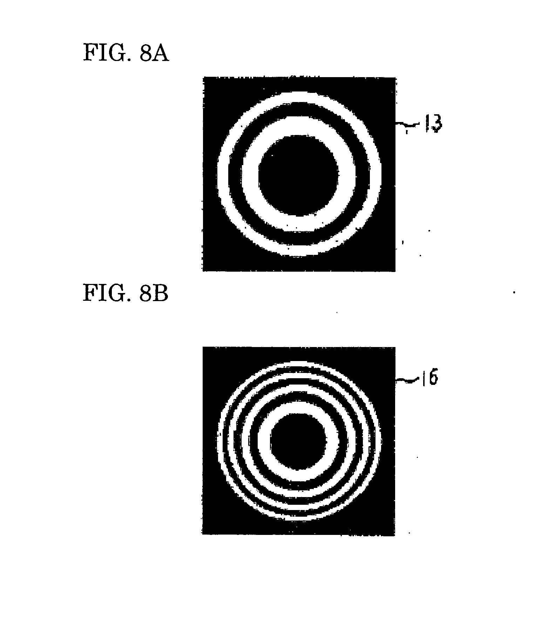

In Fig. 7D, a second resist layer 15 is formed on the upper surface of the Si substrate 11a formed from steps similar to those up to Fig. 7C. Ultraviolet light 14c is applied through a second mask 16. Fig. 8B shows a simplified plan drawing of the second mask 16. As can be seen from Fig. 8A and Fig. 8B, the second mask 16 has twice the number of banded transparent rings compared to the first mask 13. In other words, the widths of the banded transparent rings and the banded non-transparent rings of the second mask are approximately 1/2 the width of the banded transparent rings and banded non-transparent rings of the first mask.

In Fig. 7E, the exposed second resist layer 15 is developed to form a second resist pattern 15a as shown in the figure. Then, RIE is performed as indicated by an arrow 14d using the second resist pattern 15a to perform etching to a predetermined depth.

In Fig. 7F, the second resist pattern 15a is removed, providing a relief microlens 11b that can generate four levels of phase changes. Compared to two-level diffraction lenses, multi-level diffraction lenses can provide high diffraction efficiency and higher focal efficiency. Also, by repeating the photolithography and RIE steps described above N times, a relief microlens having $2^N$ levels can be made. While it is possible to achieve 100 percent diffraction efficiency with a diffraction lens having an infinite number of levels, this would require a large number of production steps and high production costs. In practice, it is likely that an eight-level diffraction lens, which provides a 95 percent diffraction efficiency, would be adequate (and could be made by repeating the above steps N=3 times).

Disclosure of Invention

In a refraction microlens array formed through ion exchange in a glass substrate as shown in Fig. 6, the improvement in the refractive index $\Delta n$ provided by ion exchange is only approximately 0.17. Because of this type of relatively low refractive index differential, it is difficult to make a lens with a short focal length. Also, since the ion exchange region 1b is formed through isotropic thermal diffusion, the lens region 1b will always be formed in a roughly hemispherical shape, making it difficult to adjust the focal length by changing lens thickness.

In diffraction microlenses, relief microlenses must have grooves formed on a transparent substrate through etching, requiring a sufficiently thick substrate. Also, precise adjustment of the depth of the etched groove is not easy. Furthermore, since fine projections and cavities are formed on the surface of a relief microlens, there is a tendency for dust and contaminants to adhese to the surface.

On the other hand, forming a diffraction microlens as a graded index microlens is difficult. The reason for this is that the maximum refractive index change that can be achieved through ion exchange in the glass plate as described above is only approximately $\Delta n=0.17$, thus making it difficult to form an efficient graded index diffraction grating. While methods for increasing the refractive index by applying an energy beam such as ultraviolet light to silica glass are known, the change in refractive index for this is even smaller than that for ion exchange (no more than approximately $\Delta n=0.01$).

The object of the present invention is to overcome the problems of the background technology described above and to provide a simple and low-cost flat microlens that is mechanically and thermally stable and that can be used in various optical fields.

In the present invention, a microlens is formed from a transparent DLC (diamond-like carbon) film that includes regions where the refractive index is graded. When a light beam passes through a region where the refractive index is graded, the light is focused.

The microlens can be a refraction microlens. In this case, a refraction lens region with a relatively high refractive index is formed on a first main surface. The lens region can have a convex lens shape formed from the first main surface of the DLC film surrounded by a boundary surface corresponding to part of a roughly spherical surface or a cylindrical convex lens shape formed from the first main surface of the DLC film surrounded by a boundary surface corresponding to part of a roughly cylindrical surface having a central axis parallel to the first main surface.

Also, the lens region can have a roughly cylindrical shape that passes all the way through the DLC film. In this case, the central axis of the cylindrical shape is perpendicular to the DLC film and the refractive index is higher toward the central axis. Furthermore, the lens region can be a band-shaped region passing all the way through the DLC film. In this case, the refractive index is higher toward a plane that passes through a midpoint along the width axis of the band-shaped region and that is perpendicular to the DLC film.

Furthermore, the microlens of the present invention can be a diffraction microlens. In this case, the DLC film can include a plurality of concentric band-shaped ring regions, with the refractive index being graded so that the band-shaped ring region acts as a diffraction grating. The widths of the band-shaped ring regions decrease as the distance of the band-shaped ring region from the center of the concentric circles increases.

In a diffraction microlens with a plurality of concentric band-shaped ring regions, the DLC film can include m concentric ring zones, with each of these ring zones containing n band-shaped ring regions. It would be preferable in each of the ring zones for the inner band-shaped ring regions to have a higher refractive index compared to the outer band-shaped ring regions, and for corresponding band-shaped ring regions in the ring zones to have the same refractive index.

Also, in a diffraction microlens of the present invention, a DLC film can include a plurality of parallel band-shaped regions, with refractive indices graded so that the band-shaped regions act as a diffraction grating. The widths of the band-shaped regions decrease as the distance from a predetermined band-shaped region increases.

In a diffraction microlens containing a plurality of parallel band-shaped regions, it would be preferable for the DLC film to include m parallel band zones with each band zone containing n band-shaped regions. In each band zone, the refractive index of a band-shaped region can increase as the distance from a predetermined band-shaped region decreases. Corresponding band-shaped regions in different band zones can have the same refractive index.

A microlens according to the present invention as described above can act as a lens for light containing wavelengths in a range from 0.4 microns to 2.0 microns. Thus, a microlens according to the present invention can be used in a wide variety of optical fields such as optical communication fields and in projectors.

In making a microlens according to the present invention, it would be preferable for the DLC film to be formed using plasma CVD (chemical vapor deposition). With plasma CVD, a transparent DLC film can be formed at a relatively low temperature on different types of substrates, e.g., silicon substrate, glass substrate, or polymer substrate.

The regions with relatively high refractive indices in the DLC film can be easily formed by increasing the refractive index through application of an energy beam on the DLC film. For the energy beam, ultraviolet radiation, X-rays, synchrotron radiation (SR), ion beams, electron beams, and the like can be used. Also, a plurality of microlenses arranged in an array on a single DLC film can be easily formed simultaneously through application of an energy beam.

Brief Description of the Drawings

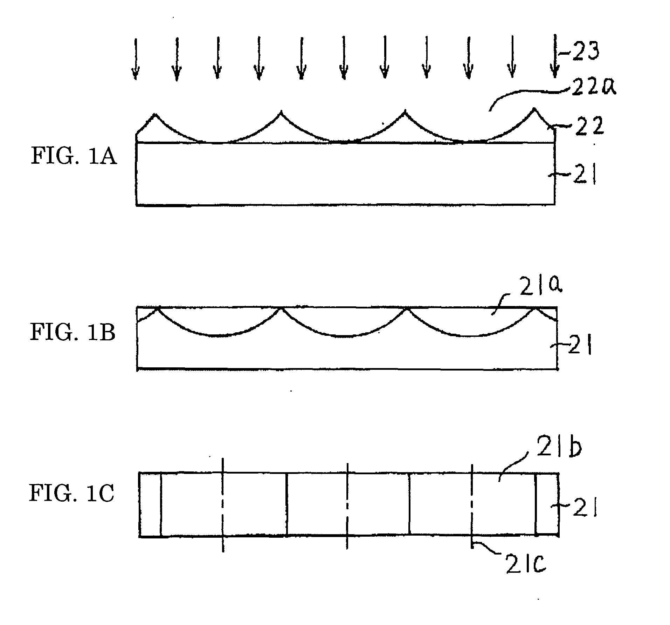

Fig. 1 is a simplified cross-section drawing illustrating a method for making a refraction microlens array according to an embodiment of the present invention.

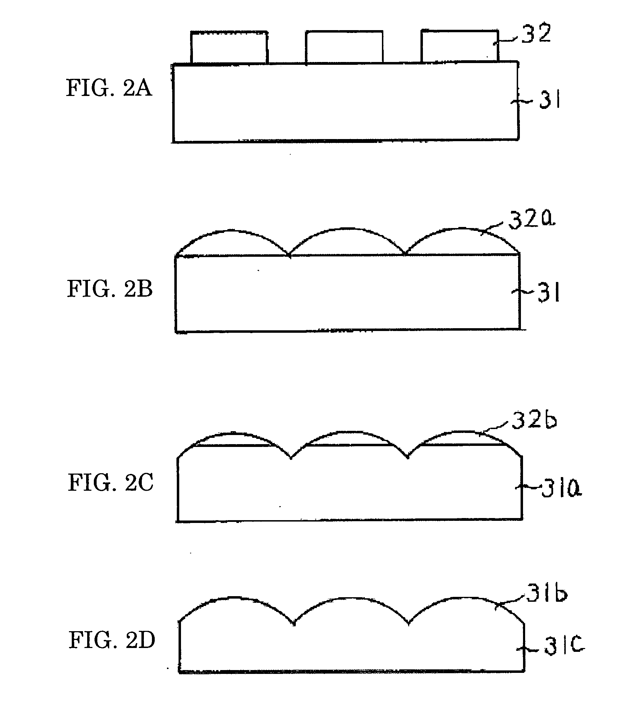

Fig. 2 is a simplified cross-section drawing illustrating a method for forming an imprint mold that can be used in the method for making a refraction microlens array shown in Fig. 1.

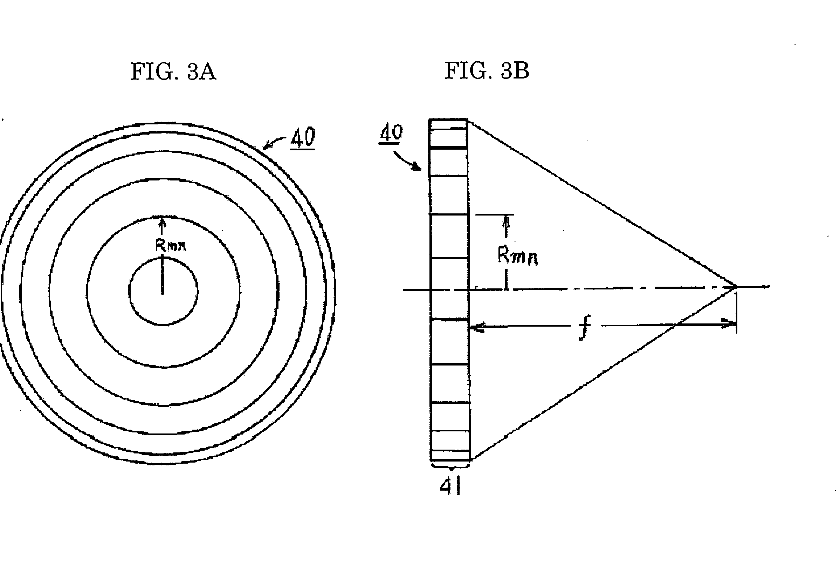

Fig. 3A is a simplified cross-section drawing illustrating a diffraction microlens according to another embodiment of the present invention. Fig. 3B is a cross-section drawing of the same.

Fig. 4 is a simplified cross-section drawing illustrating an example of a method for making a diffraction microlens shown in Fig. 3.

Fig. 5A is a simplified perspective drawing that has been partially cut away showing a conventional refraction microlens array. Fig. 5B is a simplified cross-section drawing showing the features of the same.

Fig. 6 is a simplified cross-section drawing showing a method for making a refraction microlens array shown in Fig. 5.

Fig. 7 is a simplified cross-section drawing showing a method for making a conventional relief-type diffraction microlens.

Fig. 8 is a simplified plan drawing showing a mask used in a method for making a relief microlens shown in Fig. 7.

Best Mode for Carrying Out the Invention

First, the present inventors confirmed that the refractive index of a transparent DLC (diamond-like carbon) film can be increased by exposing it to an energy beam. This type of DLC film can be formed by performing plasma CVD (chemical vapor deposition) on a silicon substrate, a glass substrate, or various other types of substrates. The transparent DLC film obtained through plasma CVD in this manner generally has a refractive index of approximately 1.55.

The energy beam used to increase the refractive index of the DLC film can be ultraviolet (UV) light, X-rays, synchrotron radiation (SR), ion beams, electron beams, and the like. SR light generally includes electromagnetic waves from a wide wavelength range, from ultraviolet light to X-rays.

For example, by injecting He ions at an acceleration voltage of 800 keV and a dosage of $5 \times 10^{17}/cm^2$, the refractive index change can be increased to approximately $\Delta n=0.65$. The refractive index can be similarly increased by injecting H ions, Li ions, B ions, C ions, and the like. Also, by applying SR light having a spectrum of 0.1 - 130 nm, the refractive index change can be increased to a maximum of $\Delta n=0.65$. Furthermore, with UV radiation, the refractive index change can be increased to approximately $\Delta n=0.22$ by, for example, pulsing a KrF excimer laser with a wavelength of 248 nm at 100 Hz with a radiation density of 160 mW/mm$^2$ per pulse. The refractive index can be increased in a similar manner using excimer lasers such as ArF (193 nm), XeCl (308 nm), XeF (351 nm), and the like or an Ar laser (488 nm). It is clear that the refractive index changes resulting from this type of energy beam exposure of the DLC film is significantly greater than the refractive index change resulting from conventional ion exchange of glass ($\Delta n=0.17$ at most) or the refractive index change resulting from UV exposure of silica glass (no more than approximately $\Delta n=0.01$).

Fig. 1 shows a simplified cross-section of a method for making a refraction micro lens array according to an embodiment of the present invention.

In Fig. 1A, a mask layer 22 is formed on a DLC film 21. Various types of materials that can restrict the transmission of an energy beam 23 can be used for the mask layer 22. For example, the material can be selected from gold, chrome, nickel, aluminum, tungsten, and the like in order to provide optimal results based on the design specification for the degree of transmission of the energy beam through the mask layer. The mask layer 22 includes an array of fine cavities 22a. Each of these cavities 22a has a bottom surface forming a section of a roughly spherical surface or a part of a roughly cylindrical surface (the axis of this cylindrical surface being perpendicular to the plane of the figure). The energy beam 23 is applied to the DLC film 21 through the mask layer 22, which includes the array of cavities 22a.

In Fig. 1B, the mask layer 22 is removed after exposure to the energy beam 23 to provide a microlens array 21a formed in the DLC film 21. More specifically, exposure to the energy beam 23 results in an array of high refractive index regions 21a being formed in the DLC film 21 based on the array of the cavities 22a in the mask layer 22. Since the cavities 22a of the mask layer 22 have spherical or cylindrical bottom surfaces, the thickness of the mask layer is greater toward the edges of the cavities 21a compared to the center. In other words, the energy beam 23 is more easily transmitted through the centers of the cavities 22a than the edges. Thus, the depth of the high refractive index regions 21a is greater toward the center and the perimeter section is shaped as a shallow spherical convex lens or a cylindrical convex lens. As a result, each of these high refractive index regions 21a act as a single microlens.

When the energy beam 23 is used to make a microlens array as illustrated in Fig. 1, the depths of the roughly spherical or roughly cylindrical cavities 22a can be adjusted to control the thickness, i.e., the focal length, of the microlenses 21a. The focal length of the microlens 21a can also be adjusted without changing the depth of the cavity 22a by varying the transmission of the applied energy beam 23. For example, if an He ion beam is used as the energy beam 23, increasing the acceleration energy of the ions will increase transmission and the focal length of the micro lens 21a will be reduced. Also, since the refractive index change $\Delta n$ is greater for higher dosages of the energy beam 23 on the DLC film, the focal length of the microlens 21a can also be adjusted by adjusting the dosage.

Fig. 1C shows a simplified cross-section of another embodiment of a microlens array. This microlens 21b includes cylindrical or banded regions passing all the way through the DLC film 21. If the microlens 21b is cylindrical, a central axis 21c thereof is parallel to the thickness axis of the DLC film 21 and the refractive index is higher toward the central axis 21c. If the microlens 21b is band-shaped, a center plane 21c passing through the midpoint along the width axis (perpendicular to the plane of the figure) is parallel to the thickness axis of the DLC film 21, with the refractive index being higher toward the center plane 21c.

The microlens array in Fig. 1C can also be formed using a method similar to that shown in Fig. 1A. More specifically, a high-energy beam that can pass through the thin regions of the mask layer 22 and the DLC film 21 can be used to increase the refractive index so that the energy beam is applied at higher dosages at the regions around the center axes or the center planes 21c.

The mask layer 22 containing the cavities 22a having roughly spherical or roughly cylindrical bottom surfaces as shown in Fig. 1A can be made using various methods. For example, the mask layer 22 is formed with a uniform thickness of the DLC film 21, and a resist layer having an array of fine holes or parallel line-shaped openings is formed. Then, isotropic etching is performed from the fine holes or the line-shaped openings of the resist layer, forming roughly hemispherical or roughly semi-cylindrical cavities 22a in the mask layer 22 under the fine holes.

The mask layer 22 that includes the cavities 22a with roughly spherical or roughly cylindrical bottom surfaces as shown in Fig. 1A can also be easily made using an imprinting die that can be prepared using the method illustrated in the simplified cross-section drawings in Fig. 2.

In Fig. 2A, for example, a resist pattern 32 is formed on a silica substrate 31. On the substrate 31, this resist pattern 32 forms an array of a plurality of fine circular regions or a plurality of thin, parallel band regions.

In Fig. 2B, the resist pattern 32 is heated and melted. The resist 32 melted on the fine circular regions or thin, band-shaped regions form a resist 32a having a roughly spherical or roughly cylindrical convex lens shape due to surface tension.

In Fig. 2C, if RIE is performed on the resist 32b shaped roughly like a convex lens along with the silica substrate 31a, the silica substrate 31b is etched while the RIE reduces the diameter or the width of the resist 32b.

As a result, the end result is a silica imprinting die 31c as shown in Fig. 2D in which roughly spherical or roughly cylindrical projections 31b are arranged. The height of the projections 31b can be adjusted by controlling the ratio of the etching rate of the resist 32b in Fig. 2C and the etching rate of the silica substrate 31a.

The resulting imprinting die 31c is suitable for making the mask layer 22 containing the cavities 22a as shown in Fig. 1A. More specifically, if the mask layer 22 is formed from gold, for example, the malleability of gold makes it possible to easily form the cavities 22a by imprinting the gold mask layer 22 with the imprinting die 31c. Also, once the imprinting die 31c is made, it can be used repeatedly. This makes it possible to form the cavities 22a far more easily and at lower cost compared to forming the cavities 22a in the mask layer 22 by etching.

In a refraction microlens array that uses a DLC film as in the present invention, high refractive index lenses are formed by applying an energy beam. As a result, compared to the use of conventional glass substrates, the refraction microlens array can be formed in a DLC that is far thinner than a glass substrate. However, even with a refraction microlens that uses a DLC film, the DLC film will be thicker than the diffraction microlens described below, with a thickness of approximately 10 microns to 20 microns or more.

The simplified plan drawing in Fig. 3A and the simplified cross-section drawing in Fig. 3B illustrate a diffraction microlens according to another embodiment of the present invention. A diffraction microlens can be made thinner than a refraction microlens, and it is possible to make a diffraction microlens in a DLC thin film having a thickness of approximately 1 - 2 microns. More specifically, this diffraction microlens 40 is also made using a DLC film 41, and includes a plurality of concentric band-shaped ring regions Rmn. The notation Rmn used here indicates the n-th band-shaped ring region in the m-th ring zone, and also indicates the radius from the center of the concentric circles to the outer perimeter of the band-shaped ring regions. The widths of the band-shaped ring regions Rmn become smaller as the distance from the center increases.

Adjacent band-shaped ring regions Rmn have different refractive indices. In the diffraction microlens in Fig. 3, if the lens is a two-level diffraction lens, ring zones up to m=3 contain band-shaped ring regions up to n=2. Within a single ring zone, the inner band-shaped ring regions have a higher refractive index than the outer band-shaped ring regions.

Analogously, in a four-level diffraction lens, a single ring zone contains band-shaped ring regions up to n=4. In this case also, in a single ring zone the band-shaped ring regions closer toward the center have a higher refractive index. More specifically, four grades of refractive index changes are formed going from the inner perimeter side to the outer perimeter side of a single ring zone. And these four grades of refractive index changes are repeated for each ring zone m times.

The radius of the outer perimeter of the band-shaped ring region can be set up to the following equation (1) that includes scalar approximation and that is based on diffraction theory. In this equation (1), L indicates a diffraction level of the lens, $\lambda$ indicates the wavelength of the light, and f indicates the focal length of the lens. Also, the maximum refractive index change $\Delta n$ must generate the maximum phase modulation amplitude $\Delta\varphi=2\Pi(L-1)/L$.

## Equation 1

$$Rmn = \sqrt{\frac{2mnf\lambda}{L} + \left(\frac{mn\lambda}{L}\right)^2} \qquad (1)$$

In the simplified cross-section drawings shown in Fig. 4, there is illustrated an example of a method for making a two-level diffraction microlens as shown in Fig. 3.

In Fig. 4A, a conductor layer 42, e.g., an Ni conductor layer, is formed on a DLC film 41 using a widely known EB (electron beam) vapor deposition method. A resist pattern 43 is formed on this Ni conductor layer so that it covers band-shaped ring regions Rmn (m=1 - 3) corresponding to n=1 in Fig. 3. Electroplating is performed to form a gold mask 44 at the opening of the resist pattern 43.

In Fig. 4B, the resist pattern 43 is removed and the gold mask 44 is left behind. An energy beam 45 is then applied to the DLC film 41 through the opening of the gold mask 44. As a result, the refractive index of the band-shaped ring region Rm1 (a region 41a in the figure) exposed to the energy beam 45 is increased, while the band-shaped ring region Rm2 (a region 41b in the figure), which has been masked from the energy beam 45, maintains the initial refractive index of the DLC film. As a result, a two-level diffraction microlens as shown in Fig. 3 is obtained. After exposure to the energy beam, the gold mask is dissolved and removed through immersion for a few minutes at room temperature in a cyanogen-based etching solution.

In the example shown in Fig. 4, the mask layer is formed directly over the DLC film, but it would also be possible as shown in Fig. 8A to apply the energy beam to the DLC film using a mask in which independent mask openings and masked sections are inverted. Based on this, it can be seen how a four-level diffraction microlens can be formed by applying an energy beam to the DLC film using a mask in which independent mask openings and masked sections are inverted, as shown in Fig. 8B. It is also clear that, in this case, this method of forming the diffraction microlens through exposure of the DLC film to an energy beam is significantly simpler than the method for making a relief microlens illustrated in Fig. 7.

Furthermore, in place of an imprinting die such as the one shown in Fig. 2D, it would also be possible to imprint a gold mask layer on the DLC film using an imprinting die having a shape such as the one shown in Fig. 7F. By applying an energy beam through the imprinted gold mask layer, a multi-level diffraction microlens can be made through one energy beam application.

Furthermore, in the above embodiment of a diffraction microlens, the diffraction microlens corresponds to a spherical convex refraction lens, but the present invention can also be applied to a diffraction microlens that corresponds to a cylindrical convex refraction lens. In this case, a plurality of parallel band-shaped regions with graded refractive indices can be used in place of the plurality of concentric band-shaped ring regions with graded refractive indices. For example, e.g., in the cross-section drawing in Fig. 3B, the plurality of parallel band-shaped regions with graded refractive indices extend perpendicular to the plane of the figure. Also, in this case, the gold mask 44 can be extended perpendicular to the plane of the figure as well.

Industrial Applicability

The present invention provides a flat microlens that is simple and low-cost and that can be used in various optical fields in a mechanically and thermally stable manner. Also, since the diffraction microlens of the present invention is a graded index microlens, it has a flat surface unlike conventional relief microlenses. This makes it possible to easily apply an anti-reflection coating and also prevents the lens functions from being degraded because dust tends not to adhese to the surface. Furthermore, since the DLC film can be formed on different types of substrate surfaces, the microlens of the present invention can be formed integrally with other optical parts.

**Claims**

1. A flat microlens wherein:

   said microlens is formed using a transparent DLC film;
   said DLC film includes a region with graded refractive indices; and
   when a light beam passes through said region with graded refractive indices, said light beam is focused.

2. A flat microlens according to claim 1 wherein:

   a refraction lens region with a relatively high refractive index is formed on a first main surface of said DLC film; and
   said lens region includes a convex lens formed from said first main surface and a surrounding boundary surface corresponding to part of a roughly spherical surface.

3. A flat microlens according to claim 1 wherein:

   a refraction lens region with a relatively high refractive index is formed on said first main surface to correspond with each of said microlenses; and
   said lens region has a shape of a columnar convex lens formed from said first main surface surrounded by a boundary surface corresponding to a part of a roughly cylindrical surface with a central axis parallel to said main surface.

4. A flat microlens according to claim 1 wherein:

   a refraction lens with a relatively high refractive index is formed on said DLC film corresponding to each of said microlenses;
   said lens region has a roughly cylindrical shape that passes completely through said DLC film; and
   a central axis of said cylindrical shape is perpendicular to said DLC film, with higher refractive indices near said central axis.

5. A flat microlens according to claim 1 wherein:

   a refraction lens with a relatively high refractive index is formed on said DLC film corresponding to each of said microlenses;
   said lens region is a band-shaped region passing completely through said DLC film; and
   refractive indices are higher near a plane passing through a midpoint of a width axis of said band-shaped region and perpendicular to said DLC film.

6. A flat microlens according to claim 1 wherein:

said DLC film includes a plurality of concentric band-shaped ring regions;
refractive indices of said band-shaped regions are graded relative to each other so that said band-shaped ring regions act as a diffraction grating; and
widths of said band-shaped ring regions decrease as a distance from a center of said concentric circles increases.

7. A flat microlens according to claim 6 wherein:

said DLC film includes m concentric ring zones, each of said ring zones containing n band-shaped ring regions;
in each of said ring zones, inner band-shaped ring regions have higher refractive indices than outer band-shaped ring regions; and
corresponding band-shaped ring regions in different ring zones have identical refractive indices.

8. A flat microlens according to claim 1 wherein:

said DLC film includes a plurality of parallel band-shaped regions;
refractive indices of said band-shaped regions are graded relative to each other so that said band-shaped regions act as a diffraction grating; and
a width of said band-shaped region decreases as a distance from a predetermined band-shaped region increases.

9. A microlens according to claim 8 wherein:

said DLC film includes m concentric band zones, each of said band zones containing n band-shaped regions;
in each of said band zones, band-shaped regions closer to said predetermined band-shaped region have higher refractive indices than band-shaped regions that are further away; and
corresponding band-shaped regions in different band zones have identical refractive indices.

10. A flat microlens according to any one of claim 1 through claim 9 wherein said microlens can act as a lens for light containing wavelengths in a range from 0.4 microns to 2.0 microns.

11. A method for making a flat microlens according to any one of claim 1 through claim 10 wherein said DLC film is formed using plasma CVD.

12. A method for making a flat microlens according to claim 11 wherein a refractive index of a region in said DLC film with a relatively high refractive index can be formed by increasing refractive index through application of an energy beam to said DLC film.

13. A method for making a flat microlens according to claim 12 wherein said energy beam application can include ultraviolet radiation, X-ray radiation, synchrotron radiation, ion beam radiation, and electron beam radiation.

14. A method for making a flat microlens according to claim 12 or claim 13 wherein a plurality of microlenses arranged in an array on a single DLC film is formed simultaneously by applying an energy beam.

FIG. 1A

FIG. 1B

FIG. 1C

FIG. 2A

FIG. 2B

FIG. 2C

FIG. 2D

FIG. 3A

FIG. 3B

EP 1 696 248 A1

FIG. 4A

44  43

42

41

FIG. 4B

45

44
42
41

41a  41b  41a  41b

FIG.5A

1

1a

1b

FIG. 5B

2  1b

1a

F

FIG. 6A

FIG. 6B

FIG. 6C

FIG. 7A

FIG. 7B

FIG. 7C

FIG. 7D

FIG. 7E

FIG. 7F

FIG. 8A

FIG. 8B

## INTERNATIONAL SEARCH REPORT

| International application No. |
|---|
| PCT/JP2004/017672 |

**A. CLASSIFICATION OF SUBJECT MATTER**
Int.Cl$^7$  G02B3/00, G02B3/08, G02B5/18

According to International Patent Classification (IPC) or to both national classification and IPC

**B. FIELDS SEARCHED**

Minimum documentation searched (classification system followed by classification symbols)
Int.Cl$^7$  G02B3/00, G02B3/08, G02B5/18

Documentation searched other than minimum documentation to the extent that such documents are included in the fields searched

| Jitsuyo Shinan Koho | 1922–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-75105 A  (Nitto Denko Corp.),<br>18 March, 1994 (18.03.94),<br>Full text; all drawings<br>(Family: none) | 1-14 |
| Y | JP 2003-248193 A  (Sumitomo Electric Industries, Ltd.),<br>05 September, 2003 (05.09.03),<br>Full text; all drawings<br>& US 2003/0117706 A1      & EP 1326127 A3 | 1-14 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 February, 2005 (04.02.05) | 01 March, 2005 (01.03.05) |

| Name and mailing address of the ISA/<br>    Japanese Patent Office | Authorized officer |
|---|---|
| Facsimile No. | Telephone No. |

Form PCT/ISA/210 (second sheet) (January 2004)